Europäisches Patentamt

European Patent Office

Office européen des brevets

(11) Numéro de publication: **0 115 721**
**A1**

## (12) DEMANDE DE BREVET EUROPEEN

(21) Numéro de dépôt: 83402423.4

(22) Date de dépôt: 14.12.83

(51) Int. Cl.³: **G 01 N 23/04, A 61 B 6/02**

(30) Priorité: 20.12.82 FR 8221319

(43) Date de publication de la demande: 15.08.84
Bulletin 84/33

(84) Etats contractants désignés: **AT BE CH DE IT LI NL SE**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Amaury, Henri, 19 Allée des Mimosas, F-33120 Arcachon (FR)**
Inventeur: **Rulmont, Francis, Résidence Clair Bois 6 rue Jean Moulin, F-33260 La Teste (FR)**

(74) Mandataire: **Mongrédien, André et al, c/o BREVATOME 25, rue de Ponthieu, F-75008 Paris (FR)**

(54) Procédé et dispositif de tomographie.

(57) L'objet (1) dont on veut réaliser une tomographie est interposé entre une source (4) de rayonnement et un film (5) sensible à ce rayonnement. On irradie l'objet au moyen de la source tout en animant cet objet et le film de mouvements de rotation synchrones et de même sens autour d'axes (10, 11) parallèles. On forme ainsi sur le film l'image d'une section (2) de l'objet, dont le plan (3) a pour image le plan (6) du film, par l'homothétie ayant pour centre la source qui transforme l'axe (10) de rotation de l'objet en l'axe (11) de rotation du film.
Application au contrôle de pièces mécaniques.

EP 0 115 721 A1

0115721

## PROCEDE ET DISPOSITIF DE TOMOGRAPHIE.

La présente invention concerne un procédé et un dispositif de tomographie . Elle s'applique notamment au contrôle non destructif de pièces dans l'Industrie.

On connaît des procédés et des dispositifs de tomographie principalement utilisés dans le domaine médical pour examiner des patients et fondés sur le traitement d'informations obtenues à partir de détecteurs de rayonnements émis par une source et ayant traversé un objet, en l'occurrence, un patient, de façon à reconstruire l'image d'une section transverse du patient. Ces procédés et ces dispositifs présentent l'inconvénient de nécessiter des moyens électroniques de traitement d'informations complexes et coûteux.

La présente invention a pour objet un procédé et un dispositif de tomographie qui ne présentent pas cet inconvénient, notamment en ce qu'ils sont beaucoup plus simples et bien moins coûteux que les procédés et les dispositifs connus cités plus haut.

De façon précise, la présente invention vise un procédé de tomographie d'un objet suivant une section de celui ci contenue dans un plan, caractérisé en ce qu'il consiste à irradier l'objet au moyen d'une source fixe de rayonnement tout en animant cet objet et une surface sensible audit rayonnement, placée à la suite de l'objet par rapport à la source et également contenue dans un plan, de mouvements de rotation synchrones et de même sens, respectivement autour d'un premier axe et d'un second axe parallèles, disposés de manière que le premier axe se transforme en le second axe par une homothétie de rapport positif et de centre la source, l'objet et la surface sensible étant disposés de manière qu'ils demeurent exposés audit rayonnement lorsqu'ils effectuent leurs mouvements de rotation, que le plan contenant la section de l'objet se transforme en le plan contenant la surface

B 7672.3 PV

sensible par l'homothétie transformant le premier axe en le second axe et que ces plans forment avec les axes des angles d'une même valeur supérieure ou égale à 0° et inférieure à 90°, de façon à former sur la surface sensible l'image d'au moins une partie de ladite section.

L'invention vise également un dispositif de tomographie d'un objet suivant une section de celui-ci contenue dans un plan, comprenant une source fixe de rayonnement pour effectuer une irradiation de l'objet, caractérisé en ce qu'il comprend en outre :

- une surface sensible audit rayonnement, placée à la suite de l'objet par rapport à la source, et également contenue dans un plan,
- un support pour l'objet et un support pour la surface sensible, et
- des moyens pour animer l'objet et la surface sensible, par l'intermédiaire de leurs supports respectifs, de mouvements de rotation synchrones et de même sens, respectivement autour d'un premier axe et d'un second axe parallèles, disposés de manière que le premier axe se transforme en le second axe par une homothétie de rapport positif et de centre la source,

l'objet et la surface sensible étant disposés sur leurs supports respectifs de manière qu'ils demeurent exposés audit rayonnement lorsqu'ils effectuent leurs mouvements de rotation, que le plan contenant la section de l'objet se transforme en le plan contenant la surface sensible par l'homothétie transformant le premier axe en le second axe et que ces plans forment avec les axes des angles d'une même valeur supérieure ou égale à 0° et inférieure à 90°, de façon à former sur la surface sensible l'image d'au moins une partie de ladite section, en effectuant simultanément ladite irradiation et lesdits mouvements de rotation.

Selon une caractéristique préférée du dispo-

B 7672.3 PV

0115721

sitif objet de l'invention, les mouvements de rotation consistent en des rotations d'un nombre entier N de tours, le nombre N étant au moins égal à un. On obtient ainsi une meilleure définition de l'image.

Selon un mode de réalisation particulier du dispositif objet de l'invention, les moyens pour animer l'objet et la surface sensible desdits mouvements de rotation comprennent un motoréducteur apte à entraîner lesdits supports en rotation, dans le même sens et de façon synchrone, autour d'axes parallèles formant respectivement lesdits premier et second axes.

Selon un autre mode de réalisation particulier, ce dispositif comporte en outre des moyens pour effectuer des déplacements de l'objet et de la surface sensible relativement l'un par rapport à l'autre, parallèlement aux premier et second axes.

Selon un autre mode de réalisation particulier, ce dispositif comporte en outre des moyens pour effectuer des déplacements de l'objet et de la surface sensible relativement l'un par rapport à l'autre, perpendiculairement aux premier et second axes.

Le dispositif peut alors également comporter, selon un autre mode de réalisation particulier, des moyens pour effectuer l'une au moins des deux inclinaisons de l'objet et de la surface sensible par rapport aux premier et second axes, c'est-à-dire des moyens d'inclinaison de l'objet par rapport au premier axe et/ou des moyens d'inclinaison de la surface sensible par rapport au second axe.

Selon un autre mode de réalisation particulier, la source est un générateur de rayons X et la surface sensible est un film radiographique pour rayons X.

Selon un autre mode de réalisation particulier, la source est un générateur de rayonnement γ, neu-

B 7672.3 PV

tronique ou électronique et la surface sensible est un film sensible audit rayonnement $\gamma$, neutronique ou électronique.

L'invention sera mieux comprise à la lecture de la description qui suit d'exemples de réalisation donnés à titre indicatif et non limitatif, en référence aux dessins annexés sur lesquels :

- la figure 1 est un schéma explicatif du procédé de tomographie objet de l'invention,

- la figure 2 est une vue schématique d'un mode de réalisation particulier du dispositif objet de l'invention, et

- les figures 3 et 4 sont des vues schématiques d'autres modes de réalisation particuliers du dispositif objet de l'invention.

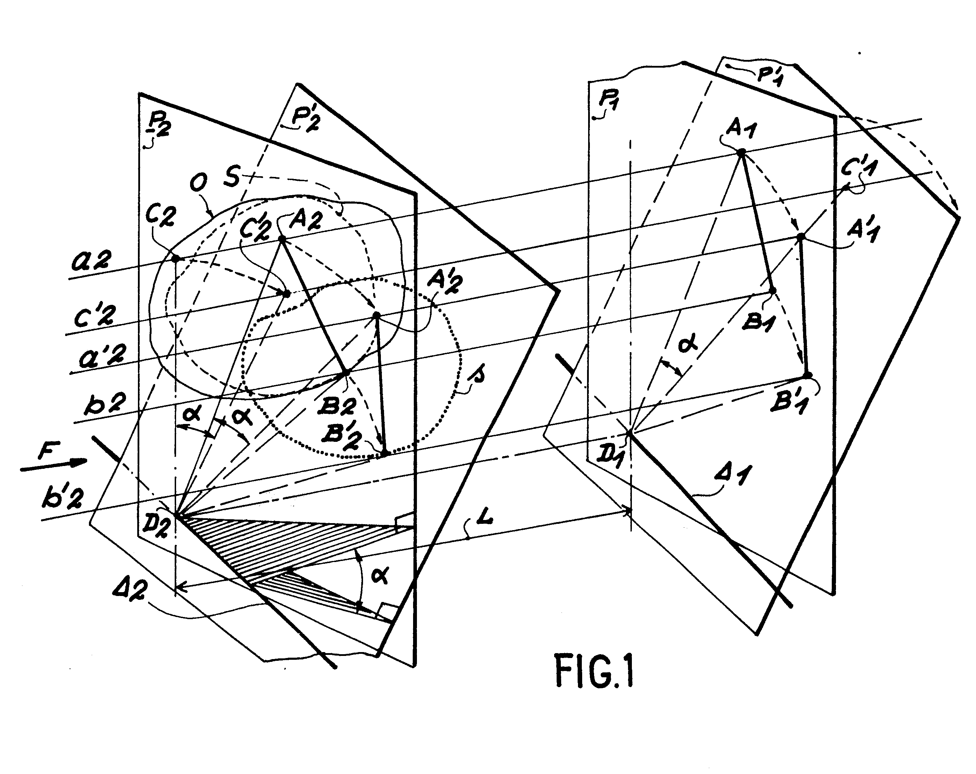

Sur la figure 1, on a représenté un schéma explicatif du procédé de tomographie selon l'invention. On irradie un objet O au moyen d'un faisceau F de rayons X ou $\gamma$ parallèles. On considère une section S de l'objet O définie par l'intersection de cet objet O par un plan $P_2$, ainsi qu'une droite $\Delta_2$ coupant le plan $P_2$ en un point $D_2$. Par une translation L parallèle au faisceau F et de même sens que celui-ci, le plan $P_2$ et la droite $\Delta_2$ se transforment respectivement en le plan $P_1$ et en la droite $\Delta_1$ qui coupe le plan $P_1$ en un point $D_1$.

Deux points $A_2$ et $B_2$ de la section S, respectivement atteints par des rayons $a_2$ et $b_2$ du faisceau F, ont respectivement pour images les points $A_1$ et $B_1$ sur le plan $P_1$. L'image sur ce plan $P_1$ d'un point $C_2$ de l'objet O également situé sur le rayon $a_2$ mais n'appartenant pas à la section S est confondue avec le point $A_1$.

On effectue alors une rotation d'angle $\alpha$ de l'objet O autour de la droite $\Delta_2$. Par cette rotation, le plan $P_2$, le point $A_2$, le point $B_2$ et le point $C_2$ se

0115721

transforment respectivement en le plan $P'_2$, le point $A'_2$, le point $B'_2$ et le point $C'_2$, la nouvelle position de la section S à la suite de cette rotation étant repérée sur la figure 1 par la surface s contenue dans le plan $P_2$ et contenant bien entendu les points $A'_2$ et $B'_2$. Par une rotation d'angle $\alpha$ de même sens que la rotation précédente, autour de la droite $\Delta_1$, le plan $P_1$, le point $A_1$, le point $B_1$ et le point $C_1$ se transforment respectivement en le plan $P'_1$, le point $A'_1$, le point $B'_1$ et le point $C'_1$. Les deux points $A'_2$ et $B'_2$ du plan $P'_2$, respectivement atteints par des rayons $a'_2$ et $b'_2$, ont respectivement pour images les points $A'_1$ et $B'_1$ sur le plan $P'_1$, alors que le point $C'_2$, atteint par un rayon $c'_2$, a pour image sur le plan $P'_1$ le point $C'_1$ qui n'est pas confondu avec le point $A'_1$.

D'une façon générale, lors de rotations synchrones et de même sens de l'objet O autour de la droite $\Delta_2$ et du plan $P_1$ autour de la droite $\Delta_1$, seuls les points de la section S conservent leurs images dans le plan $P_1$ et ces images demeurent en outre les mêmes au cours desdites rotations. Au contraire, tout point de l'objet O non contenu dans la section S, a son image dans le plan $P_1$ rendue floue au cours de ces rotations. Par conséquent, en remplaçant le plan $P_1$ par un film plan, sensible au rayonnement X ou $\gamma$ considéré, et en animant l'objet O et le film de mouvements de rotation synchrones et de même sens, respectivement autour des droites $\Delta_2$ et $\Delta_1$, on obtient sur le film une image nette de la section de l'objet O située dans un plan $P_2$ qui se transforme en le plan du film par la translation qui transforme la droite $\Delta_2$ en la droite $\Delta_1$. En revanche, les images des points de l'objet O situés en dehors de ce plan $P_2$ subissent un déplacement continu et sont donc rendues floues.

On peut alors généraliser le procédé qui vient

6    0115721

d'être exposé, en considérant non plus une translation mais une homothétie ayant pour centre une source de rayonnement (non représentée) au moyen de laquelle on irradie l'objet O. En animant cet objet O et le film plan, sensible audit rayonnement et placé à la suite de l'objet par rapport à la source, de mouvements de rotation synchrones et de même sens, respectivement autour des droites $\Delta_2$ et $\Delta_1$, on obtient sur le film une image de la section de l'objet O située dans un plan qui se transforme en le plan du film par l'homothétie ayant pour centre la source et transformant la droite $\Delta_2$ en la droite $\Delta_1$.

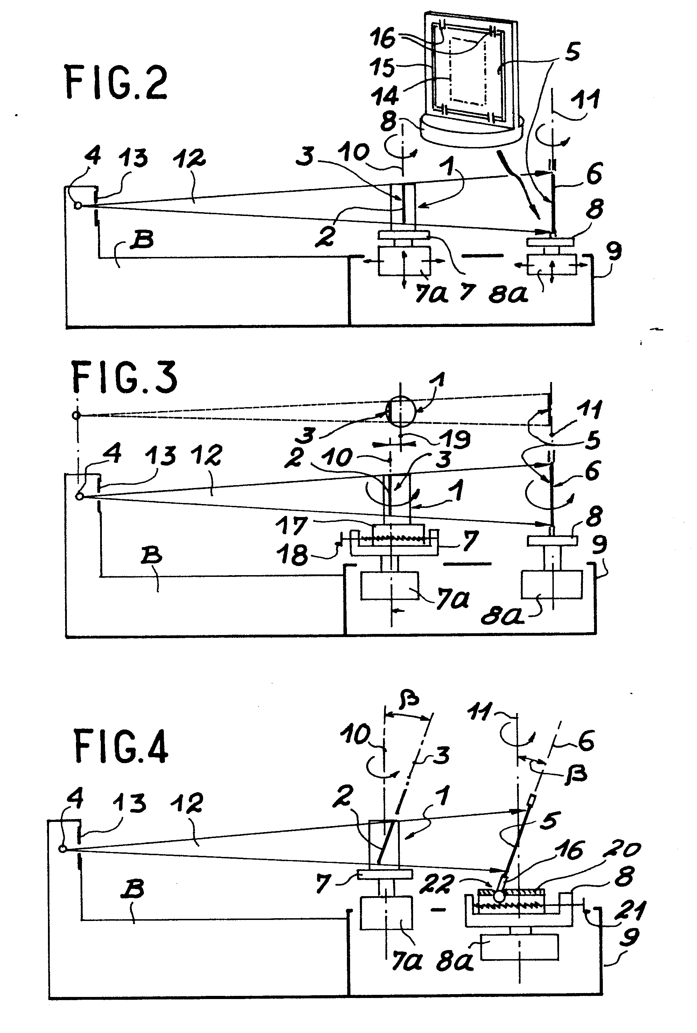

Sur la figure 2, on a représenté schématiquement un mode de réalisation particulier du dispositif objet de l'invention, permettant de réaliser une tomographie d'un objet 1 selon une section 2 de celui-ci repérée à l'avance et contenue dans un plan 3 dont on voit la trace sur la figure 2. Le dispositif comprend essentiellement, sur un bâti B, une source fixe 4 de rayonnement, un film 5 sensible à ce rayonnement et également contenu dans un plan 6 dont on voit la trace sur la figure 2, un premier plateau 7 et un second plateau 8 disposés horizontalement et servant respectivement de supports à l'objet 1 et au film 5, et un motoréducteur 9 apte à faire tourner dans le même sens et à une même vitesse constante, c'est-à-dire de façon synchrone, les plateaux 7 et 8 autour de leurs axes respectifs 10 et 11 verticaux et parallèles. Dans ce qui suit, l'axe 10 du premier plateau 7 est appelé premier axe et l'axe 11 du second plateau 8 est appelé second axe.

La source 4 de rayonnement est choisie de façon à être la plus ponctuelle possible. Dans la mesure où l'on souhaite réaliser un examen densitométrique fin du cliché ainsi obtenu, il est souhaitable de choisir une source de rayonnement la plus monochromatique possi-

B 7672.3 PV

ble, ou une source de rayonnement polychromatique associée à un filtre de longueur d'onde. Sinon, une source à rayonnement continu seule peut très bien convenir. A titre d'exemple, la source 4 est un générateur de rayons X commercialisé par la Société BALTEAU, de tension d'utilisation variable de 50 kV à 400 kV, à rayonnement continu, ayant un débit de dose dans l'axe du faisceau produit de 50 rads/mn à 1 m et ayant un foyer de l'ordre de 0,7 mm de diamètre. Le film 5 est un film radiographique pour rayons X, de type A ou M, commercialisé par la société KODAK, que l'on peut utiliser nu ou monté sous enveloppe. Le motoréducteur 9 comporte un moteur à courant continu accouplé à un réducteur dont on peut faire varier la vitesse de 1 tour/mn à 10 tours/mn.

La disposition relative de la source 4 et du motoréducteur 9 est telle que l'objet 1, maintenu sur le premier plateau 7, soit interposé entre la source 4 et le film 5 maintenu sur le second plateau 8. En outre, la source 4 est disposée dans le plan contenant les axes 10 et 11, de façon à envoyer son rayonnement 12 sur l'objet 1 lorsqu'elle fonctionne. La source 4 peut être réglable en hauteur pour optimiser le réglage du dispositif de tomographie. Le motoréducteur 9 est muni d'organes 7a et 8a réalisables par l'homme de l'art, permettant respectivement le réglage de la hauteur des plateaux 7 et 8, c'est-à-dire le déplacement de ceux-ci parallèlement aux axes 10 et 11, pour positionner correctement en hauteur l'objet 1 par rapport au film 5, de façon à pouvoir obtenir sur ce film 5, lorsqu'on le souhaite, une image complète de la section 2 examinée, la taille du film 5 étant alors aussi convenablement choisie. Les organes 7a et 8a peuvent également être prévus pour régler l'écartement entre les axes 10 et 11. Un diaphragme 13 est placé devant la source 4 pour éviter une diffusion du rayonnement qu'elle émet, dans le lieu où se trouve le dispositif de tomographie. Le cas échéant, et pour améliorer la qualité de la reproduction de la section de l'objet sur le film, on peut aussi interposer un diaphragme entre l'objet 1 et le film 5.

La distance entre la source 4 et l'objet 1 est choisie la plus grande possible pour limiter le facteur de grandissement qui a pour conséquence l'apparition d'un "flou géométrique". Pour la même raison, la distance entre le film 5 et l'objet 1 est choisie la plus faible possible, mais dépend de toute façon des dimensions de l'objet 1 à examiner. On cherche bien entendu, à trouver un compromis entre la distance source-objet et le temps d'exposition et l'on constate qu'une distance source-objet de l'ordre de 2 m et un temps d'exposition de l'ordre de 0,5 à 3 mn conviennent. Un facteur de grandissement de l'ordre de 1,1 semble un bon compromis, en notant que le flou géométrique n'est pas dépendant du facteur de grandissement en tant que tel, mais de la variation du facteur de grandissement que subit chacun des éléments de surface de la section de l'objet 1 à représenter lorsque cet objet et le film 5 tournent sur eux-mêmes.

La disposition relative de l'objet 1 et du film 5 sur leurs plateaux 7 et 8 respectifs est choisie de telle manière que le plan 6 du film 5 soit l'homothétique du plan 3 de la section 2 dont on désire former l'image 14 sur le film 5, par l'homothétie ayant pour centre la source 4 et transformant le premier axe 10 en le second axe 11. Ainsi, en irradiant l'objet 1 au moyen d'une source 4 de rayons X par exemple, tout en faisant tourner dans le même sens, de façon synchrone et d'un nombre entier de tours (au moins égal à un), les plateaux 7 et 8 et donc l'objet 1 et le film 5, on forme sur ce film 5 une image nette 14 de la section 2 de l'objet 1, comme on l'a expliqué dans la description de la figure 1, l'intensité du rayonnement X tombant sur le film 5 après avoir traversé l'objet 1 étant bien entendu fonction de l'absorption dudit rayonnement par cet objet 1.

A titre d'exemple, le film 5 est monté sur un cadre 15 et maintenu sur ce cadre 15 au moyen de pinces 16. Le cadre 15 est fixé sur le second plateau 8 de manière que le plan 6 du film 5 soit vertical et contienne le second axe 11. On dispose alors l'objet 1 sur le premier plateau 7 de façon que le premier axe 10 coupe l'objet 1 et que le plan 3 contenant la section 2 étudiée contienne aussi le premier axe 10 et soit parallèle au film 5. De toute façon, avec la disposition particulière du film 5 prédédemment indiquée, on forme sur ce film 5 l'image de l'intersection de l'objet 1 et du plan vertical parallèle au film 5 et contenant l'axe 10 du premier plateau 7, ladite intersection n'étant alors pas forcément repérée à l'avance. Les plateaux 7 et 8 et les pinces 16 sont de préférence réalisés à l'aide de matériaux présentant, vis-à-vis du rayonnement utilisé, une absorption très inférieure à celle de l'objet 1 étudié.

Pour obtenir sur le film 5 l'image d'une autre section de l'objet 1, il suffit de déplacer l'objet 1 sur son plateau 7 de manière que le plan de cette section contienne le premier axe 10 et soit parallèle au film 5, sans déplacer ce film 5 qui contient donc toujours le deuxième axe 11. (On a traduit ceci sur une vue rabattue de la figure 3 où l'on voit un déplacement de l'objet impliquant un déplacement du plan 3 de section à partir de sa position initiale 19). Pour ce faire, l'objet 1 n'étant pas nécessairement facilement manipulable, on ajoute au dispositif représenté sur la figure 2 des moyens 17 (figure 3) pour déplacer l'objet 1 sur le premier plateau 7, perpendiculairement au premier axe 10. Il s'agit par exemple d'un chariot à déplacement régla-

B 7672.3 PV

ble par vis 18, chariot sur lequel est maintenu l'objet 1, comme on l'a représenté sur la figure 3. On peut ainsi déplacer l'objet 1 par rapport au film 5, parallèlement à ce dernier et perpendiculairement aux axes 10 et 11. Bien entendu, on pourrait munir le second plateau 8 de moyens de déplacement comparables aux moyens 17, pour déplacer le cadre 16 et donc le film 5, perpendiculairement aux axes 10 et 11, de façon à positionner convenablement le film et non plus l'objet pour former sur le film l'image de la section souhaitée, ce film 5 demeurant bien entendu vertical.

Sur la figure 4, on a représenté schématiquement un autre mode de réalisation particulier du dispositif de tomographie objet de l'invention. Il est réalisé en adjoignant au dispositif représenté sur la figure 2 des moyens 20 de déplacement du cadre 16 et donc du film 5, sur le second plateau 8, perpendiculairement au second axe 11. Il s'agit par exemple d'un chariot à déplacement réglable par vis 21, chariot dont est rendu solidaire le cadre 16. On ajoute également à ces moyens 20, des moyens 22 d'inclinaison du cadre 16 et donc du film 5, par rapport au second axe 11. Plus précisément, ces moyens 21 d'inclinaison, réalisables par l'homme de l'art, portent le cadre 16 et sont montés sur les moyens 20 de déplacement.

Ces moyens 20 de déplacement et les moyens 22 d'inclinaison permettent de former sur le film 5 l'image d'une section 2 de l'objet 1 maintenu sur son plateau 7, section dont le plan 3 forme un angle β, compris entre 0° et 90°, avec le premier axe 10 : on agit sur les moyens 20 de déplacement et sur les moyens 22 d'inclinaison pour rendre le plan 6 du film 5 homothétique du plan 3 de la section 2, dans l'homothétie ayant pour centre la source 4 et transformant le premier axe 10 en le second axe 11, le plan 6 du film 5 faisant alors le

B 7672.3 PV

même angle β avec le second axe 11. On agit ensuite éventuellement sur les organes 7a et/ou 8a pour placer l'objet 1 à une hauteur correcte par rapport au film 5 puis l'on irradie l'objet 1 tout en faisant tourner les plateaux 7 et 8 dans le même sens, de façon synchrone et d'un nombre entier de tours (au moins égal à un) de façon à obtenir l'image recherchée. (On notera que sur la figure 4, ainsi que sur les figures 2 et 3 d'ailleurs, la section 2 n'est pas complètement représentée pour rendre ces figures plus claires).

Bien entendu, on pourrait également munir le premier plateau 7 de moyens de déplacement et d'inclinaison de l'objet 1, qui seraient comparables aux moyens 20 et 22 précédents, et sur lesquels on agirait pour positionner correctement l'objet 1 par rapport au film 5 qui pourrait alors conserver la position qu'il occupe sur la figure 2 dans laquelle le plan 6 du film contient l'axe 11 du second plateau 8. Dans certains cas, il pourrait même être commode d'agir à la fois sur les moyens de déplacement et d'inclinaison de l'objet et du film pour obtenir la position relative souhaitée pour ces derniers.

La source 4 de rayonnement pourrait bien entendu être une source de photons γ ou d'autres rayonnements pénétrants par exemple neutroniques ou électroniques, le film 5 étant alors adapté à ces rayonnements. Dans la description qui précède, le mot "film" est d'ailleurs pris avec le sens général de "surface sensible à un rayonnement". Ainsi pourrait-on associer dans la présente invention une source de photons X ou γ à un scintillateur plan constituant ladite surface sensible, ce scintillateur, fait en iodure de césium par exemple, étant lui-même suivi par un film photographique plan, parallèle audit scintillateur et placé avec ce dernier dans une enveloppe opaque à la lumière.

B 7672.3 PV

0115721

Outre sa simplicité et son faible prix de revient, dus notamment à l'emploi d'une surface sensible à un rayonnement tel qu'un film et non pas de moyens de détection associés à des moyens électroniques de traitement compliqués, l'invention permet le contrôle de pièces formées de matériaux dont les coefficients d'absorption sont différents les uns des autres et sont de plus nettement supérieurs à ceux du corps humain, chose qui est très difficile à réaliser avec les dispositifs de tomographie de l'art antérieur, destinés au domaine médical.

0115721

## REVENDICATIONS

1. Procédé de tomographie d'un objet (1) suivant une section (2) de celui-ci contenue dans un plan (3), caractérisé en ce qu'il consiste à irradier l'objet (1) au moyen d'une source fixe (4) de rayonnement tout en animant cet objet (1) et une surface (5) sensible audit rayonnement, placée à la suite de l'objet (1) par rapport à la source (4), et également contenue dans un plan (6), de mouvements de rotation synchrones et de même sens, respectivement autour d'un premier axe (10) et d'un second axe (11) parallèles, disposés de manière que le premier axe (10) se transforme en le second axe (11) par une homothétie de rapport positif et de centre la source (4), l'objet (1) et la surface sensible (5) étant disposés de manière qu'ils demeurent exposés audit rayonnement lorsqu'ils effectuent leurs mouvements de rotation, que le plan (3) contenant la section (2) de l'objet (1) se transforme en le plan (6) contenant la surface sensible (5) par l'homothétie transformant le premier axe (10) en le second axe (11) et que ces plans (3, 6) forment avec les axes (10, 11) des angles d'une même valeur supérieure ou égale à 0° et inférieure à 90°, de façon à former sur la surface sensible (5) l'image (14) d'au moins une partie de ladite section (2).

2. Dispositif de tomographie d'un objet (1) suivant une section (2) de celui-ci contenue dans un plan (3), comprenant une source (4) fixe de rayonnement pour effectuer une irradiation de l'objet (1), caractérisé en ce qu'il comprend en outre :
- une surface (5) sensible audit rayonnement, placée à la suite de l'objet (1) par rapport à la source (4), et également contenue dans un plan (6),
- un support (7) pour l'objet (1) et un support (8) pour la surface sensible (5), et

B 7672.3 PV

- des moyens (9) pour animer l'objet (1) et la surface sensible (5), par l'intermédiaire de leurs supports (7, 8) respectifs, de mouvements de rotation synchrones et de même sens, respectivement autour d'un premier axe (10) et d'un second axe (11) parallèles, disposés de manière que le premier axe (10) se transforme en le second axe (11) par une homothétie de rapport positif et de centre la source (4),

l'objet (1) et la surface sensible (5) étant disposés sur leurs supports (7, 8) respectifs de manière qu'ils demeurent exposés audit rayonnement lorsqu'ils effectuent leurs mouvements de rotation, que le plan (3) contenant la section (2) de l'objet (1) se transforme en le plan (6) contenant la surface sensible (5) par l'homothétie transformant le premier axe (10) en le second axe (11) et que ces plans (3, 6), forment avec les axes (10, 11) des angles d'une même valeur supérieure ou égale à 0° et inférieure à 90°, de façon à former sur la surface sensible (5) l'image (14) d'au moins une partie de ladite section (2), en effectuant simultanément ladite irradiation et lesdits mouvements de rotation.

3. Dispositif selon la revendication 2, caractérisé en ce que les mouvements de rotation consistent en des rotations d'un nombre entier N de tours, le nombre N étant au moins égal à un.

4. Dispositif selon l'une quelconque des revendications 2 et 3, caractérisé en ce que les moyens (9) pour animer l'objet (1) et la surface sensible (5) desdits mouvements de rotation comprennent un motoréducteur apte à entraîner lesdits supports (7, 8) en rotation, dans le même sens et de façon synchrone, autour d'axes parallèles formant respectivement lesdits premier (10) et second (11) axes.

5. Dispositif selon l'une quelconque des revendications 2 à 4, caractérisé en ce qu'il comporte en

B 7672.3 PV

outre des moyens (7a, 8a) pour effectuer des déplacements de l'objet (1) et de la surface sensible (5) relativement l'un par rapport à l'autre, parallèlement aux premier (10) et second (11) axes.

6. Dispositif selon l'une quelconque des revendications 2 à 5, caractérisé en ce qu'il comporte en outre des moyens (17, 18 ou 20, 21) pour effectuer des déplacements de l'objet (1) et de la surface sensible (5) relativement l'un par rapport à l'autre, perpendiculairement aux premier (10) et second (11) axes.

7. Dispositif selon la revendication 6, caractérisé en ce qu'il comporte également des moyens (22) pour effectuer l'une au moins des deux inclinaisons de l'objet (1) et de la surface sensible (5), par rapport aux premier (10) et second (11) axes.

8. Dispositif selon l'une quelconque des revendications 2 à 7, caractérisé en ce que la source (4) est un générateur de rayons X et en ce que la surface sensible (5) est un film radiographique pour rayons X.

9. Dispositif selon l'une quelconque des revendications 2 à 7, caractérisé en ce que la source (4) est un générateur de rayonnement γ, neutronique ou électronique et en ce que la surface sensible (5) est un film sensible audit rayonnement γ, neutronique ou électronique.

FIG.1

FIG.2

FIG.3

FIG.4

Office européen
des brevets

**RAPPORT DE RECHERCHE EUROPEENNE**

0115721

Numéro de la demande

EP  83 40 2423

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | DE-C- 972 794 (J. DUMER) <br><br> * Page 2, ligne 1 - page 3, ligne 6; figures 1-7 * | 1,3,5, 6,8 | G 01 N 23/04 <br> A 61 B 6/02 |
| Y | GB-A-1 582 833 (EMI LTD.) <br> * Page 2, ligne 121 - page 3, ligne 15; page 3, lignes 58-63; page 4, lignes 1-23; figures 1a-3 * | 1,3,7 | |
| A | US-A-4 000 425 (D.R. CRAIG) <br><br> * Abrégé; colonne 3, lignes 23-61; colonne 4, lignes 37-43; figures 1-6 * | 1-3,7, 8 | |
| A | FR-A-1 511 590 (GOSUDARSTVENNY PROEKTNY INSTITUT) <br> * Page 1, colonne de droite, lignes 17-24; page 2, colonne de gauche, ligne 17 - colonne de droite, ligne 20; figures 1-3 * | 1,2,4, 5,8 | **DOMAINES TECHNIQUES RECHERCHES (Int. Cl. 3)** <br><br> A 61 B 6/02 <br> G 01 N 23/04 |
| A | FR-A-1 118 076 (PHILIPS) <br> * Page 2, colonne de droite, lignes 3-17; figure 5 * | 1,8 | |
| A | DE-C- 693 374 (G. FRANK) <br><br> --- | | |

Le présent rapport de recherche a été établi pour toutes les revendications

| Lieu de la recherche <br> LA HAYE | Date d'achèvement de la recherche <br> 28-03-1984 | Examinateur <br> RIEB K.D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................

& : membre de la même famille, document correspondant

OEB Form 1503. 03.82